(19) Europäisches Patentamt

European Patent Office

Office européen des brevets

(11) **EP 2 487 057 A1**

(12) **DEMANDE DE BREVET EUROPEEN**

(43) Date de publication:
**15.08.2012   Bulletin 2012/33**

(51) Int Cl.:
***B60G 17/08*** *(2006.01)*

(21) Numéro de dépôt: **12305070.0**

(22) Date de dépôt: **20.01.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **10.02.2011   FR 1151057**

(71) Demandeur: **Renault S.A.S.**
**92100 Boulogne-Billancourt (FR)**

(72) Inventeurs:
• **BOUTRON, Olivier**
**27940 AUBEVOYE (FR)**
• **LEROY, Philippe**
**91940 LES ULIS (FR)**
• **LUCEA, Marc**
**92100 BOULOGNE-BILLANCOURT (FR)**
• **PLICHET, Roger**
**27340 PONT DE L'ARCHE (FR)**
• **POTHIN, Richard**
**78760 JOUARS-PONTCHARTRAIN (FR)**

(54) **Procédé de pilotage simplifié d'amortisseurs**

(57)   L'invention se rapporte à un procédé de pilotage simplifié d'amortisseurs semi-actifs d'un véhicule automobile.

La principale caractéristique d'un procédé de pilotage selon l'invention, est qu'il comprend une étape consistant à caractériser les principaux mouvements du véhicule et à détecter le phénomène de battements de roue, à partir de données déjà présentes et disponibles dans ledit véhicule, cette caractérisation et cette détection s'effectuant, soit au moyen d'une estimation des principaux paramètres régissant lesdits mouvements et ledit phénomène de battements, soit au moyen de cartographies.

**Fig. 3**

**Description**

L'invention se rapporte à un procédé de pilotage d'amortisseurs semi-actifs. Les amortisseurs semi-actifs obéissent à des lois d'amortissement, qui peuvent être modifiées continument entre une valeur minimum et une valeur maximum, suivant la valeur des signaux qui les pilotent. Le principal intérêt d'un système de suspensions semi-actives à amortissements variables, est de pouvoir, selon les situations de conduite, modifier le couplage entre les masses dites non suspendues, comme par exemple, les roues, et la masse suspendue comme la caisse du véhicule.

L'utilisation de tels systèmes nécessite actuellement un certain nombre de capteurs additionnels à placer sur le véhicule, de manière à pouvoir caractériser les mouvements de la caisse, à travers notamment la mesure de la vitesse de roulis, de la vitesse de tangage ou de la vitesse de pompage, et les mouvements des roues, à travers notamment la mesure des vitesses de débattement et des vitesses du centre des roues suivant un axe vertical. En effet, ces grandeurs, qui caractérisent les mouvements de roulis et de tangage du véhicule ainsi que les mouvements de roue, sont habituellement utilisées par les stratégies usuelles de pilotage d'amortisseurs semi-actifs, dont l'objectif est d'amortir les mouvements de la caisse et des roues, pour trouver un compromis acceptable en termes de confort et de tenue de route. Ces capteurs additionnels sont constitués, selon l'état de la technique, de gyroscopes ou d'accéléromètres placés sur la caisse du véhicule, de plusieurs capteurs de débattement placés au niveau de chaque suspension, et de plusieurs accéléromètres placés au voisinage du centre des roues. Or, la mise en place de tous ces capteurs additionnels ainsi que du câblage associé, est coûteuse en termes de temps de montage et de mise au point, mais aussi à l'achat. De plus, tous ces capteurs peuvent se dégrader dans le temps, que ce soit au niveau de leur performance intrinsèque, ou de la qualité de leur fixation dans le véhicule, qui peut les amener à vibrer ou à se déplacer. Enfin, ils nécessitent d'être implantés à des endroits bien particuliers, sélectionnés pour recueillir les meilleurs signaux ou informations possibles, cette opération d'implantation optimisée pouvant s'avérer compliquée, dans un environnement aussi restreint et peu accessible, que celui proposé par un véhicule automobile.

On trouve également dans l'état de la technique des solutions simplifiées, qui s'appuient sur des technologies d'amortisseurs variables à niveaux discrets, pour lesquels n'est disponible qu'un nombre réduit de lois reliant l'effort à la vitesse. Ces solutions simplifiées permettent de détecter des situations de conduite, qui peuvent induire des mouvements particuliers de la caisse, ces solutions ne visant pas à estimer l'amplitude de ces mouvements. Les procédés selon l'invention, présentent l'avantage par rapport à ces solutions simplifiées, d'estimer continument les mouvements de la caisse, et donc d'adapter continûment les lois effort/vitesse des amortisseurs.

Les procédés de pilotage simplifiés d'amortisseurs semi-actifs selon l'invention, permettent d'avoir accès aux paramètres caractérisant les principaux mouvements d'un véhicule automobile, comme le roulis ou le tangage, ainsi qu'à ceux permettant de détecter un débattement éventuel des roues, à partir de données déjà présentes et disponibles dans le véhicule automobile, sans avoir à implanter de capteurs additionnels, spécialement dédiés à la mesure de ces paramètres ainsi qu'à cette détection potentielle. En effet, les véhicules actuels sont déjà équipés d'un certain nombre de moyens conçus pour accéder, soit par des mesures, soit par des calculs, à des données dynamiques, permettant de caractériser le véhicule à tout instant, comme par exemple, l'accélération longitudinale ou transversale de ce véhicule, ou encore les vitesses de rotation des roues, ou la pression au maitre cylindre. A partir de ces données disponibles, acquises sous forme de mesures ou accessibles par des cartographies, les procédés de pilotage selon l'invention permettent ainsi d'estimer des grandeurs, comme par exemple, la vitesse de roulis ou la vitesse de tangage du véhicule, qui sont représentatives des principaux mouvements du véhicule, et qui servent de paramètres d'entrée aux stratégies de pilotage des amortisseurs semi-actifs. Une fois que les principales caractéristiques des mouvements de roulis et de tangage du véhicule ont été obtenues, et une fois qu'un battement potentiel de roue a été détecté, ces informations sont transmises directement aux amortisseurs semi-actifs, qui sont alors réglés en conséquence. Le réglage de ces amortisseurs peut être modulé par le conducteur, en fonction du ressenti qu'il souhaite avoir dans le véhicule. Cette modulation s'opère au moyen d'un bouton, que le conducteur peut actionner, et qui sélectionne un mode de fonctionnement particulier desdits amortisseurs, pouvant par exemple aller d'une configuration confort à une configuration sport, en passant éventuellement par d'autres configurations intermédiaires. En résumé, la principale caractéristique d'un procédé de pilotage selon l'invention, consiste à exploiter des données déjà présentes et disponibles dans le véhicule automobile, pour caractériser les principaux mouvements d'un véhicule automobile, puis à envoyer les informations obtenues aux amortisseurs semi-actifs, afin de les régler de façon optimale, lesdites données n'étant pas initialement prévues pour cette caractérisation.

L'invention a pour objet un procédé de pilotage simplifié d'amortisseurs semi-actifs d'un véhicule automobile. La principale caractéristique d'un procédé selon l'invention est qu'il comprend une étape consistant à caractériser les principaux mouvements du véhicule et à détecter le phénomène de battements de roue, à partir de données déjà présentes et disponibles dans ledit véhicule, cette caractérisation et cette détection s'effectuant, soit au moyen d'une estimation des principaux paramètres régissant lesdits mouvements et ledit phénomène de battements, soit au moyen de cartographies. De cette manière, les procédés de pilotage d'amortisseurs selon l'invention, s'affranchissent d'une étape de mesures directes des paramètres caractérisant les principaux mouvements d'un véhicule, au moyen de capteurs additionnels, spécialement conçus pour cette caractérisation. En effet, l'ajout de capteurs entraîne forcément des coûts à l'achat, et du temps d'implantation et de mise au point sur le véhicule. Ces capteurs additionnels peuvent de plus se dégrader dans le temps, soit par usure de leur matériau constitutif, soit en vibrant ou en se déplaçant suite à une détérioration progressive de leur arrimage sur le véhicule. Enfin, ils nécessitent d'être placés à des endroits très spécifiques du véhicule, afin d'optimiser les signaux qu'ils récupèrent, le choix de ces emplacements précis d'implantation pouvant s'avérer compliqué dans un environnement confiné et peu accessible, tel que celui proposé par un véhicule automobile. Sur la plupart des véhicules actuels, un certain nombre de signaux sont déjà présents, parmi lesquels et de façon non-exhaustive, l'accélération transversale au centre de gravité, l'accélération longitudinale au centre de gravité, les vitesses de rotation des roues. Ces signaux constituent les données déjà présentes et disponibles dans le véhicule, et à partir desquelles seront estimés les paramètres permettant de caractériser les principaux mouvements du véhicule, comme le roulis ou le tangage, ainsi que ceux permettant de détecter les battements de roue. Ces données sont généralement mesurées au moyen de capteurs, déjà implantés dans le véhicule.

Avantageusement, les données déjà présentes et disponibles dans le véhicule sont à choisir dans le groupe constitué par l'accélération transversale au centre de gravité, l'angle au volant, l'accélération longitudinale au centre de gravité, la pression au maitre cylindre, le couple effectif, les vitesses de rotation des roues. Ces signaux sont déjà présents sur la plupart des véhicules actuels. Suivant les paramètres à estimer, ces données peuvent être utilisées seules ou en combinaison.

De façon préférentielle, l'un des paramètres est la vitesse de roulis. En effet, la vitesse de roulis est l'un des paramètres essentiels permettant de caractériser le mouvement de roulis d'un véhicule automobile, et qui est également utilisé, de façon prépondérante, dans la mise au point des stratégies de pilotage d'amortisseurs semi-actifs.

Selon un premier mode de réalisation préféré d'un procédé selon l'invention, la donnée déjà présente et disponible dans le véhicule pour estimer la vitesse de roulis est l'angle volant.

Avantageusement, la relation liant l'angle au volant $\alpha$ à la vitesse de roulis $\vartheta$ est donnée, dans le domaine fréquentiel où s est l'opérateur de Laplace, par la fonction de transfert suivante :

$$\frac{\dot{\vartheta}(s)}{\alpha(s)} = \frac{G_\alpha \cdot s}{s^2 + 2\xi_\alpha \omega_{n_\alpha} \cdot s + \omega_{n_\alpha}^2}$$

où $G_\alpha$ représente le gain statique de cette fonction de transfert, $\omega_{n\alpha}$ sa pulsation propre et $\xi_a$ son coefficient d'amortissement. Ces paramètres peuvent être exprimés en fonction des grandeurs caractéristiques du véhicule, comme par exemple, la vitesse longitudinale, la géométrie du châssis et de la direction, les caractéristiques des trains et les masses, et seront identifiés lors d'essais dans une phase de mise au point.

Selon un deuxième mode de réalisation préféré d'un procédé selon l'invention, la donnée déjà présente et disponible dans le véhicule, pour estimer la vitesse de roulis est l'accélération transversale.

Avantageusement, la mesure de l'accélération transversale permet d'estimer la vitesse de roulis en utilisant la fonction de transfert suivante :

$$\frac{\dot{\vartheta}(s)}{\gamma_t(s)} = \frac{G_\gamma \cdot s}{s^2 + 2\xi_\gamma \omega_{n_\gamma} \cdot s + \omega_{n_\gamma}^2}$$

où $G_\gamma$ représente le gain statique de cette fonction de transfert, $\omega_{n\gamma}$ sa pulsation propre et $\xi_\gamma$ son coefficient d'amortissement.

Entre ces deux méthodes d'évaluation de la vitesse de roulis, la mesure d'angle volant est privilégiée, car elle constitue le signal le plus en avance de phase pour caractériser les mouvements de roulis de la caisse du véhicule

Préférentiellement, l'un des paramètres est la vitesse de tangage. En effet, la vitesse de tangage est l'un des paramètres essentiels permettant de caractériser le mouvement de tangage d'un véhicule automobile, et qui est également utilisé, de façon prépondérante, dans la mise au point des stratégies de pilotage d'amortisseurs semi-actifs.

De façon avantageuse, la donnée déjà présente et disponible dans le véhicule pour estimer la vitesse de tangage est l'accélération longitudinale.

Préférentiellement, la fonction de transfert utilisée pour estimer la vitesse de tangage à partir de l'accélération longitudinale est donnée par:

$$\frac{\dot{\phi}(s)}{\gamma_l(s)} = \frac{G_{\gamma_l} \cdot s}{s^2 + 2\xi_{\gamma_l}\omega_{n_{\gamma_l}} \cdot s + \omega_{n_{\gamma_l}}^2}$$

OÙ $G_{\gamma l}$, $\omega_{n\gamma l}$ et $\xi_{\gamma l}$ représentent respectivement le gain statique, la pulsation propre et le coefficient d'amortissement de cette fonction de transfert. Ces coefficients seront identifiés à partir d'essais dans une phase de mise au point.

Avantageusement, la donnée présente et disponible dans le véhicule permettant d'estimer le paramètre apte à détecter le phénomène de battement de roue est la vitesse de rotation des roues du véhicule.

Selon un mode de réalisation préféré d'un procédé selon l'invention, le procédé comprend une étape postérieure consistant à envoyer aux amortisseurs semi-actifs, des requêtes élaborées directement à partir de la valeur estimée des paramètres.

Selon un autre mode de réalisation préféré d'un procédé selon l'invention, le procédé comprend une étape postérieure consistant à envoyer aux amortisseurs semi-actifs, des requêtes élaborées au moyen de cartographies.

Le procédé de pilotage selon l'invention, présente le double avantage d'être avantageux en termes de coût et de complexité de mise en oeuvre, puisqu'il ne nécessite aucun capteur additionnel, apte à évaluer la composante de roulis et/ou la composante de tangage d'un mouvement de véhicule automobile, et/ou apte à détecter le battement d'une roue. Ce procédé s'affranchit également de tout le câblage associé à ces capteurs additionnels, demeurant une source d'encombrement non négligeable, et demeurant toujours difficile à intégrer dans un véhicule automobile.

On donne ci-après, la description détaillée, de deux modes de réalisation préférés d'un procédé de pilotage selon l'invention, en se référant aux figures 1 à 6.

- La figure 1 est un diagramme montrant les lois d'amortissement d'un amortisseur semi-actif, Vdeb représentant la vitesse de débattement de l'amortisseur, Famo représentant l'effort produit par l'amortisseur sur la caisse.

- La figure 2 représente l'architecture matérielle du système complet

- La figure 3 est un schéma fonctionnel d'une première variante de l'algorithme hébergé dans le calculateur 4 de l'architecture de la figure 2

- La figure 4 est un schéma fonctionnel d'une deuxième variante de l'algorithme hébergé dans le calculateur 4 de l'architecture de la figure 2

- La figure 5 est un schéma fonctionnel du bloc d'arbitrage de la variante 1, et correspondant au bloc 22 de la figure 3.

- La figure 6 est un schéma fonctionnel du bloc « composante roulis » du bloc d'arbitrage de la variante 1, représenté à la figure 5.

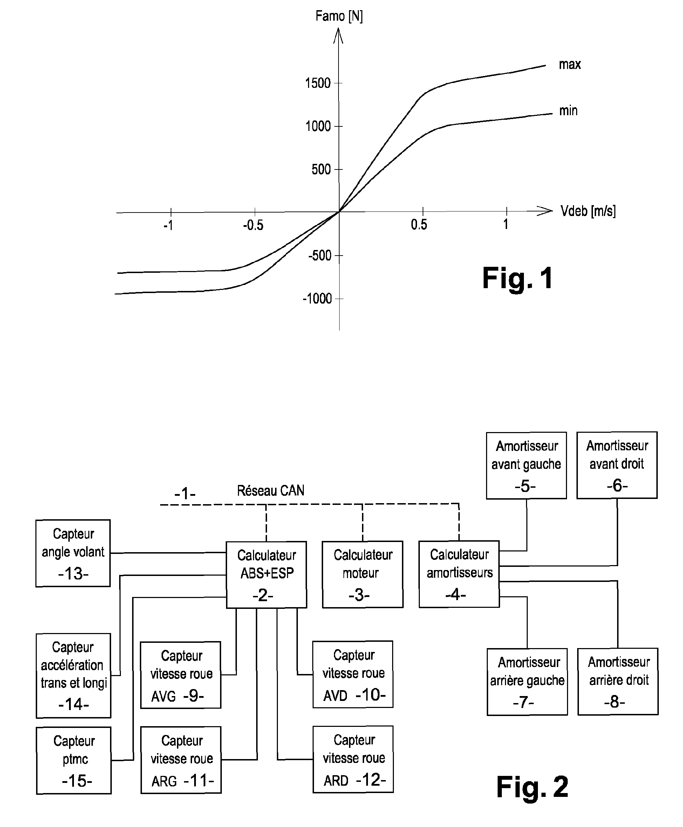

En se référant à la figure 1, les amortisseurs semi-actifs présentent des lois d'amortissement pouvant être modifiées continûment entre deux valeurs minimum et maximum, suivant la valeur des signaux qui les pilotent, lesdits signaux étant fonction des paramètres caractérisant les principaux mouvements d'un véhicule automobile, à savoir, les mouvements de roulis et de tangage, ainsi que des paramètres permettant de détecter un éventuel battement des roues. Les procédés de pilotage simplifiés selon l'invention, visent notamment à évaluer lesdits signaux, non pas à partir de valeurs directement mesurées au moyen de capteurs additionnels sur le véhicule et spécialement conçus pour ces mesures, mais à travers une estimation effectuée à partir de données déjà présentes sur ledit véhicule.

En se référant à la figure 2, les procédés de pilotage selon l'invention, sont mis en oeuvre au moyen d'un système complet, dont une architecture possible impliquerait :

- Un réseau CAN principal 1, sur lequel circulent les signaux émis par les différents calculateurs embarqués du véhicule,

- Un calculateur ABS/ESP 2, qui émet habituellement les signaux de vitesse de rotation des roues, d'angle volant, d'accélération longitudinale, d'accélération transversale, et de pression au maitre cylindre,

- Un calculateur 3 moteur, qui émet habituellement le signal de couple réalisé par le moteur,

- Un calculateur 4 dédié aux amortisseurs, qui hébergera les stratégies d'estimation et de pilotage des amortisseurs,

- Quatre amortisseurs semi-actifs 5,6,7,8, respectivement avant gauche, avant droit, arrière gauche et arrière droit,

- Quatre capteurs 9,10,11,12 de vitesse de rotation des roues respectivement avant gauche, avant droit, arrière gauche et arrière droit,

- Un capteur 13 d'angle volant,

- Un capteur 14 d'accélération longitudinale et transversale au centre de gravité,

- Un capteur 15 de pression au maitre cylindre du circuit de freinage.

Cette architecture n'est pas restrictive, car l'ensemble des stratégies relatives aux amortisseurs 5,6,7,8 pourrait également être hébergé par un calculateur qui ne serait pas exclusivement dédié aux amortisseurs 5,6,7,8. Il est à noter que les principaux signaux produits par ce système sont déjà présents dans la plupart des véhicules actuels, et pourraient devenir indispensables prochainement en raison des contraintes issues d'une règlementation européenne liée à l'ESC. A partir de ces principaux signaux disponibles, deux modes de réalisation préférés d'un procédé simplifié de pilotage selon l'invention, peuvent être mis en oeuvre, et sont présentés ci-après.

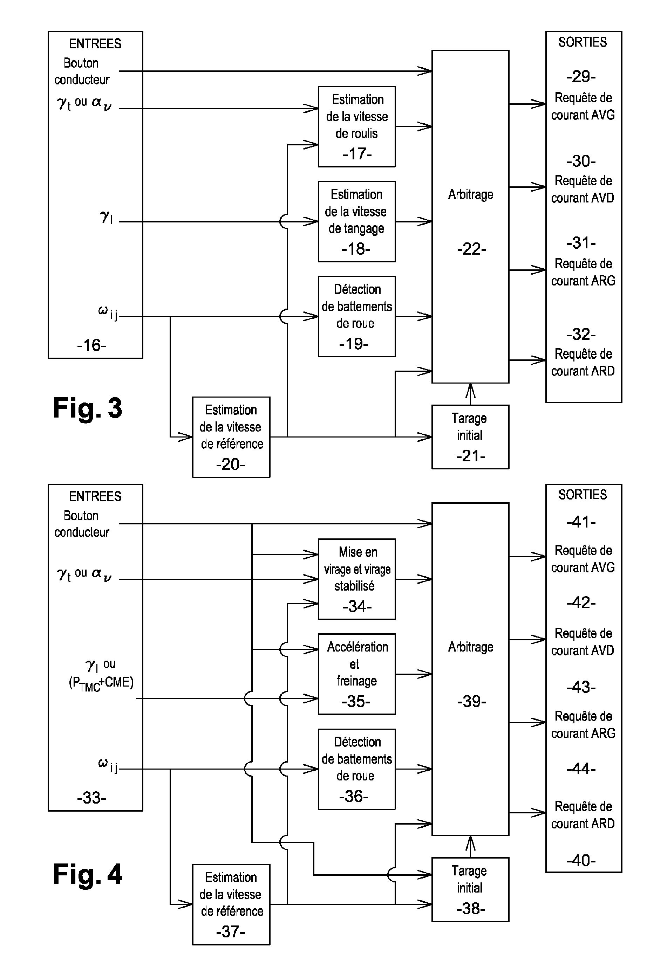

En se référant à la figure 3, un premier mode de réalisation préféré d'un procédé de pilotage selon l'invention, met en oeuvre une première variante d'algorithme hébergé dans le calculateur 4 du système, spécialement dédié aux amortisseurs. Ce premier mode de réalisation préféré d'un procédé selon l'invention, permet d'estimer la vitesse de roulis du véhicule, la vitesse de tangage du véhicule et de détecter un éventuel battement de roue. Le schéma fonctionnel de cette première variante d'algorithme, permet de distinguer :

- Un bloc 16 regroupant les signaux d'entrée utilisés par l'algorithme,

- Un bloc 17 d'estimation de la vitesse de roulis, cette estimation s'appuyant sur les signaux d'accélération transversale ou d'angle volant. Avantageusement, la mesure d'angle volant est privilégiée, car elle constitue le signal le plus en avance de phase pour caractériser les mouvements de roulis de la caisse du véhicule. La relation liant l'angle au volant $\alpha$ à la vitesse de roulis $\vartheta$ est donnée, dans le domaine fréquentiel (où s est l'opérateur de Laplace), par la fonction de transfert suivante :

$$\frac{\dot{\vartheta}(s)}{\alpha(s)} = \frac{G_\alpha \cdot s}{s^2 + 2\xi_\alpha \omega_{n_\alpha} \cdot s + \omega_{n_\alpha}^2}$$

où $G_\alpha$ représente le gain statique de cette fonction de transfert, $\omega_{n\alpha}$ sa pulsation propre et $\xi_\alpha$ son coefficient d'amortissement. Ces paramètres peuvent être exprimés en fonction des grandeurs caractéristiques du véhicule (vitesse longitudinale, géométrie du châssis et de la direction, caractéristiques des trains, masses,...), et seront identifiés lors d'essais dans une phase de mise au point. Dans un second mode de réalisation, la mesure de l'accélération transversale $\gamma_t$ permet d'estimer la vitesse de roulis, en utilisant la fonction de transfert suivante :

$$\frac{\dot{\vartheta}(s)}{\gamma_t(s)} = \frac{G_\gamma \cdot s}{s^2 + 2\xi_\gamma \omega_{n_\gamma} \cdot s + \omega_{n_\gamma}^2}$$

où $G_\gamma, \omega_{n\gamma}$ et $\xi_\gamma$ représentent le même type de paramètres à identifier pour cette seconde fonction de transfert.

- Un bloc 18 d'estimation de la vitesse de tangage, cette estimation s'appuyant sur le signal d'accélération longitudinale $\gamma_l$. La fonction de transfert utilisée pour estimer la vitesse de tangage $\dot{\varphi}$ s'écrit :

$$\frac{\dot{\varphi}(s)}{\gamma_l(s)} = \frac{G_{\gamma_l} \cdot s}{s^2 + 2\xi_{\gamma_l} \omega_{n_{\gamma_l}} \cdot s + \omega_{n_{\gamma_l}}^2}$$

où $G_{\gamma l}, \omega_{n\gamma l}$ et $\xi_{\gamma l}$ représentent respectivement le gain statique, la pulsation propre et le coefficient d'amortissement de cette fonction de transfert, qu'il convient d'identifier à partir d'essais dans une phase de mise au point.

- Un bloc 19 de détection de battement de roue, cette détection s'appuyant sur les mesures de vitesses de rotation des roues. Son principe est de filtrer les vitesses mesurées de rotation des roues dans la bande de fréquence 10Hz-15Hz, qui est caractéristique du phénomène de battement de roue, et d'opérer un seuillage et une temporisation sur ces signaux filtrés, afin de détecter une augmentation durable de leur amplitude. Cette méthode est décrite dans le brevet FR2914993. En sortie de ce bloc, on obtient un signal booléen, Flag_Battement, valant 1 si du battement est détecté sur au moins l'une des roues du véhicule, et 0 sinon.

- Un bloc 20 d'estimation de la vitesse de référence. La relation suivante est utilisée pour estimer la vitesse longitudinale du véhicule, dans le cas d'un véhicule à traction pour lequel les roues motrices sont situées à l'avant,

$$V_{ref} = R_{roue} \frac{\omega_{21} + \omega_{22}}{2}$$

où $R_{roue}$ est le diamètre des roues arrières (en m), $\omega_{21}$ et $\omega_{22}$ sont respectivement les vitesses de rotation de la roue arrière gauche et arrière droite (en rad/s). Dans le cas d'un véhicule à propulsion (roues motrices situées à l'arrière), on utilise une relation similaire en remplaçant les vitesses de rotations des roues arrière par celles des roues avant.

- Un bloc 21 de tarage initial permettant de définir, au moyen de cartographies dépendant de la vitesse de référence estimée par le bloc précédent 20, les valeurs des tarages initiaux à appliquer à chacun des amortisseurs 5,6,7,8. Il s'agit d'appliquer par défaut une valeur du signal de pilotage des amortisseurs, ce signal pouvant, par exemple, correspondre au courant alimentant les électrovannes, et qui permette d'obtenir un niveau d'amortissement satisfaisant, et qui empêche les amortisseurs de se placer dans leur mode de défaut. La plupart des amortisseurs semi-actifs requièrent, en effet, un courant d'alimentation de leur électrovanne non nul, qui est typiquement compris entre 0,6A et 1,9A, dans leur mode de fonctionnement nominal. On définit donc dans ce bloc 21 les cartographies pour l'alimentation des amortisseurs, en dehors des autres contributions liées au contrôle des mouvements de la caisse ou des roues. Ces cartographies constituent des paramètres du système, à adapter dans une phase de mise au point.

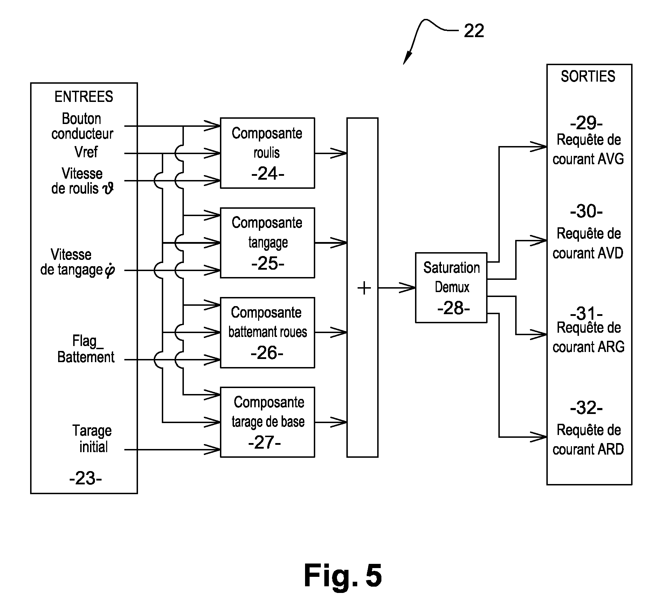

- Un bloc 22 d'arbitrage permettant de prendre en compte les tarages initiaux estimés par le bloc 21, et les estimations réalisées précédemment pour élaborer les requêtes de courant d'alimentation globale de chacun des amortisseurs 5,6,7,8. Ce bloc prend également en compte l'information issue d'un bouton situé par exemple sur le tableau de bord du véhicule, et qui permet au conducteur de définir le typage voulu pour son véhicule. A titre d'exemple, le conducteur peut avoir à sa disposition, quatre modes de fonctionnement possibles: confort, forte charge, sport, ou radical. Suivant la valeur de ce signal, les requêtes de courant pour chacun des amortisseurs prennent des valeurs différentes. En se référant à la figure 5, le bloc 22 d'arbitrage comprend :

   o Un bloc d'entrée 23. Ce bloc regroupe les entrées utilisées par le bloc d'arbitrage 22. Il s'agit des informations : position du bouton conducteur, vitesse de référence $V_{ref}$ issue du bloc 20, vitesse de roulis $\dot{\vartheta}$ issue du bloc 17, vitesse de tangage $\dot{\varphi}$ issue du bloc 18, Flag_Battement issu du bloc 19, tarage initial issu du bloc 21.

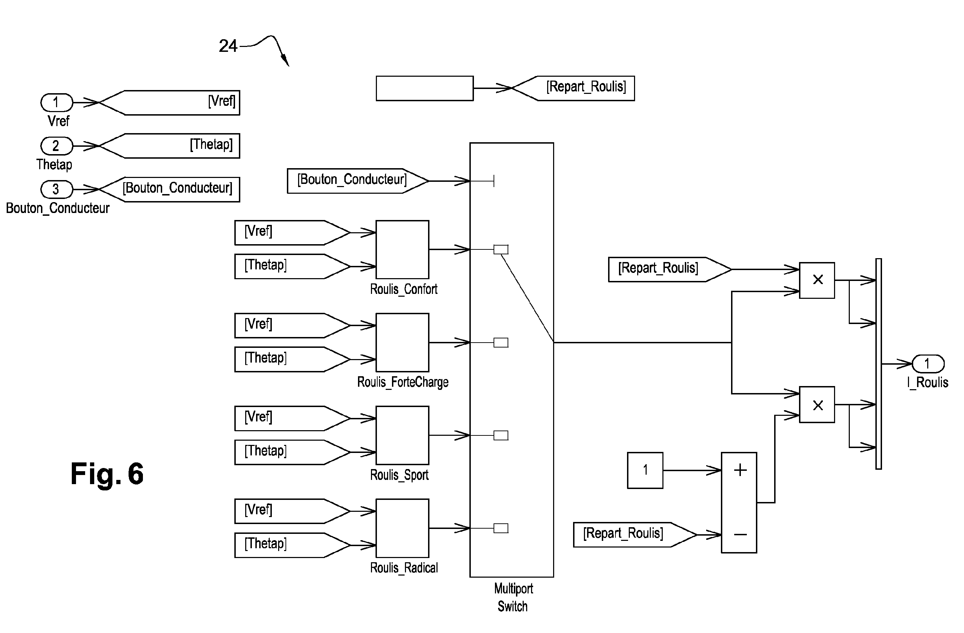

   o Une composante roulis 24. En se référant à la figure 6, ce bloc 24 élabore en fonction des informations vitesse de référence, position de bouton conducteur, et vitesse de roulis estimée, les requêtes de courant pour chacun des 4 amortisseurs 5,6,7,8 afin d'amortir les mouvements de roulis de la caisse. Il contient un ensemble de 4 cartographies, appelées Roulis_Comfort, Roulis_ForteCharge, Roulis_Sport, Roulis_Radical, entre lesquelles on permute suivant la position du bouton conducteur : chaque cartographie est donc dédiée à la mise au point de l'un des modes défini par le conducteur au moyen de son bouton. Elles prennent en entrée les variables vitesse de référence et vitesse de roulis estimée, et produisent un signal qui sera multiplié par le paramètre de réglage Repart_Roulis, qui est compris entre 0 et 1, pour les requêtes concernant les deux amortisseurs avant 5,6, et qui vaut (1-Repart_Roulis) pour les requêtes concernant les deux amortisseurs arrières 7,8. En sortie de ce bloc 24, on obtient donc 4 requêtes de courant, qui constituent les composantes à ajouter au tarage initial pour amortir les mouvements de roulis de la caisse.

   o Une composante tangage 25. Ce bloc 25 fonctionne sur le même principe que le bloc 24 précédent. En fonction des signaux vitesse de référence, position du bouton conducteur, et vitesse de tangage estimée, des requêtes de courant sont élaborées pour chacun des quatre amortisseurs 5,6,7,8. Ces requêtes peuvent être établies au moyen de cartographies, entre lesquelles on permutera suivant la position du bouton conducteur, dépendant de la vitesse longitudinale et de la vitesse de tangage estimée. Un paramètre de réglage, Repart_Tangage, permet de pondérer différemment les contributions aux amortisseurs avant 5,6 et arrière 7,8.

o Une composante battement de roue 26. Ce bloc 26 prend en entrée le signal booléen Flag_Battement, la vitesse longitudinale, et la position du bouton conducteur. Quand le signal Flag_Battement prend la valeur 1, ce qui signifie que le phénomène de battement de roue a été détecté sur au moins l'une des roues du véhicule, une requête de courant additionnelle pour chacun des 4 amortisseurs est envoyée en sortie du bloc 26. Ces requêtes peuvent être construites au moyen de cartographies dépendant de la vitesse de référence. On permutera à nouveau entre 4 paramétrages différents suivant la position du bouton conducteur. Le fait d'augmenter forfaitairement le tarage de tous les amortisseurs, et donc leur coefficient d'amortissement, permet d'atténuer le phénomène de battement de roue.

o Une composante tarage initial 27. A partir des signaux de tarage initial issu du bloc 21, de la vitesse de référence, et de la position du bouton conducteur, ce bloc 27 permet d'adapter les tarages initiaux, précédemment définis, au typage demandé par le conducteur au moyen de son bouton. Une nouvelle cartographie, fonction de la vitesse de référence et du signal bouton conducteur, définit un facteur multiplicatif à appliquer au signal de tarage initial. En sortie de ce bloc 27, on obtient donc 4 requêtes de courant, qui représentent les tarages initiaux à appliquer effectivement aux amortisseurs 5,6,7,8.

o Les sorties des blocs 24,25,26,27 sont ensuite additionnées au niveau du bloc + illustré à la figure 5, pour chaque amortisseur, de façon à prendre en compte toutes les composantes, à savoir, tarage initial, roulis, tangage, battement de roue, dans l'élaboration des requêtes finales.

o Un bloc de saturation et de démultiplexage 28. Les requêtes relatives à chacun des 4 amortisseurs 5,6,7,8 subissent un démultiplexage dans ce bloc 28, et une saturation est appliquée à chacune d'entre elles pour tenir compte des limitations propres à la technologie d'amortisseurs variables utilisée. On peut, par exemple, saturer les signaux à 1,6A.

On obtient ainsi, en sortie du bloc d'arbitrage 22, quatre requêtes 29,30,31,32 de courant, chacune étant destinée à un amortisseur 5,6,7,8, lesdites requêtes étant réalisées par l'étage de puissance du calculateur amortisseur 4.

Les sorties de cette première variante de l'algorithme sont à nouveau les 4 requêtes de courant pour l'alimentation des servovalves et/ou des électrovannes équipant les amortisseurs 5,6,7,8. Ces requêtes prennent en compte les tarages initiaux et le contrôle des mouvements de caisse et de roues, suivant le typage demandé par le conducteur au moyen de son bouton au tableau de bord.

Un deuxième mode de réalisation préféré d'un procédé de pilotage selon l'invention, met en oeuvre une deuxième variante d'algorithme hébergé dans le calculateur 4 du système, spécialement dédié aux amortisseurs 5,6,7,8. Ce deuxième mode de réalisation préféré d'un procédé de pilotage selon l'invention, se distingue du premier mode de réalisation, par le fait que les requêtes envoyées à chaque amortisseur 5,6,7,8 sont élaborées uniquement au moyen de cartographies. Contrairement au premier mode de réalisation préféré d'un procédé selon l'invention, ce deuxième mode ne se fonde pas sur une estimation des vitesses de roulis et de tangage, mais s'appuie sur des signaux, qui sont à l'origine des principaux mouvements de la caisse. Pour contrôler les mouvements de tangage du véhicule, on utilise donc les informations relatives à l'accélération longitudinale du véhicule , soit par le biais d'une mesure directe de l'accélération longitudinale, ou soit par le biais des actions du conducteur décrivant cette volonté d'accélérer ou freiner. Pour contrôler les mouvements de roulis, on considère le signal d'angle volant ou la mesure directe de l'accélération transversale.

En se référant à la figure 4, le schéma fonctionnel de cette deuxième variante d'algorithme, permet de distinguer :

- Un bloc d'entrée 33. Il reprend le même type de signaux que dans la variante 1, excepté le signal d'accélération longitudinale, qui peut être remplacé par une mesure de la pression au maitre cylindre du circuit de freinage, et une estimation du couple moteur efficace (CME).

- Un bloc de mise en virage et de virage stabilisé 34. Ce bloc 34 s'appuie sur les informations d'accélération transversale mesurée (ou d'angle au volant mesuré), de vitesse longitudinale estimée, et de position du bouton conducteur pour produire en sortie des requêtes de courant correspondant à la contribution à ajouter au tarage initial dans ces situations de mise en virage et de virage stabilisé. Pour la partie mise en virage, les opérations suivantes sont réalisées :

o Dérivation du signal accélération transversale ou angle volant. Cette opération de dérivation peut être précédée par une opération de filtrage, afin d'éliminer des signaux mesurés dans les composantes hautes fréquences.

Il s'agit d'un filtrage passe-bas, de fréquence de coupure ~20Hz. Ce signal dérivé est alors caractéristique des prises de roulis du véhicule.

o Des cartographies, entre lesquelles on permutera suivant la position du bouton conducteur, permettent alors de définir, en fonction de la valeur du signal dérivé obtenu et de la vitesse de référence estimée, le tarage supplémentaire à appliquer aux amortisseurs 5,6,7,8 pour amortir la vitesse de roulis de la caisse du véhicule.

o Un paramètre de répartition Repart_Roulis, compris entre 0 et 1, définit quelle proportion est appliquée aux amortisseurs avant 5,6 au moyen d'une multiplication de la sortie des cartographies par ce paramètre, et aux amortisseurs arrière 7,8 au moyen d'une multiplication par 1-Repart_Roulis de la sortie desdites cartographies.

o Une temporisation réglable est ensuite appliquée à ces requêtes pour conserver une contribution non nulle pendant un certain délai, afin de tenir compte de la dynamique de roulis du véhicule.

Pour la partie virage stabilisé, des cartographies, entre lesquelles on permutera suivant la position du bouton conducteur, fonction de la vitesse longitudinale estimée et du signal d'angle volant ou d'accélération transversale, définissent directement la contribution à ajouter au tarage initial dans les situations de virage stabilisé. Un paramètre de répartition, Repart_VirageStab, définit également la façon de répartir cette contribution entre les amortisseurs avant 5,6 et arrière 7,8.

On additionne ensuite les deux contributions « mise en virage » et « virage stabilisé », pour produire en sortie des requêtes de courant pour chacun des amortisseurs 5,6,7,8.

- Un bloc accélération et freinage 35 consommant en entrée, soit la mesure du signal d'accélération longitudinale, soit l'ensemble des deux mesures de pression au maitre cylindre et de couple moteur efficace, et la position du bouton conducteur. La dérivée de ces variables est caractéristique des mouvements de tangage de la caisse du véhicule. Le ou les signaux d'entrée sont, dans un premier temps, filtré(s) passe-bas et dérivés, puis utilisés en entrée de cartographies, entre lesquelles on permutera suivant la position du bouton conducteur, et qui définissent la contribution à appliquer au tarage initial afin d'amortir convenablement les mouvements de tangage. Une temporisation paramétrable est également appliquée.

- Un bloc de détection de battement de roue 36, et un bloc d'estimation de la vitesse de référence 37. Ces blocs 36,37 sont identiques à ceux 19,20 de la première variante de l'algorithme.

- Un bloc de tarage initial 38, consommant en entrée l'estimation de la vitesse de référence et la position du bouton conducteur. Il permet de définir, au moyen de cartographies, entre lesquelles on permutera suivant la position du bouton conducteur), et qui dépendent de la vitesse de référence, les tarages initiaux à appliquer à chaque amortisseur.

- Un bloc d'arbitrage 39, additionnant, dans un premier temps, les contributions issues des blocs de tarage initial, de mise en virage et virage stabilisé, et d'accélération et freinage. Dans un deuxième temps, lorsque le signal Flag_Battement, issu du bloc de détection de battement de roue, prend la valeur 1, d'autres cartographies, entre lesquelles on permutera suivant la position du bouton conducteur, permettent de définir une nouvelle contribution à ajouter aux requêtes de courant. Une saturation des requêtes est également réalisée.

- Un bloc de sorties 40, dans lequel on retrouve quatre requêtes de courant 41,42,43,44, pour l'alimentation des servovalves ou électrovannes équipant les amortisseurs 5,6,7,8.

**Revendications**

1. Procédé de pilotage simplifié d'amortisseurs semi-actifs d'un véhicule automobile, comprenant une étape consistant à caractériser les principaux mouvements du véhicule et à détecter le phénomène de battements de roue, à partir de données déjà présentes et disponibles dans ledit véhicule, cette caractérisation et cette détection s'effectuant, soit au moyen d'une estimation des principaux paramètres régissant lesdits mouvements et ledit phénomène de battements, soit au moyen de cartographies, **caractérisé en ce que** les données déjà présentes et disponibles dans le véhicule sont à choisir dans le groupe constitué par l'accélération transversale au centre de gravité, l'angle au volant, l'accélération longitudinale au centre de gravité, la pression au maître cylindre, le couple effectif, et les vitesses de rotation des roues.

2. Procédé selon la revendication 1, **caractérisé en ce que** l'un des paramètres est la vitesse de roulis.

**3.** Procédé selon la revendication 2, **caractérisé en ce que** la donnée déjà présente et disponible dans le véhicule pour estimer la vitesse de roulis est l'angle volant.

**4.** Procédé selon la revendication 3, **caractérisé en ce que** la relation liant l'angle au volant $\alpha$ à la vitesse de roulis $\dot{\vartheta}$ est donnée, dans le domaine fréquentiel où s est l'opérateur de Laplace, par la fonction de transfert suivante :

$$\frac{\dot{\vartheta}(s)}{\alpha(s)} = \frac{G_\alpha \cdot s}{s^2 + 2\xi_\alpha \omega_{n_\alpha} \cdot s + \omega_{n_\alpha}^2}$$

où $G_\alpha$ représente le gain statique de cette fonction de transfert, $\omega_{n_\alpha}$ sa pulsation propre et $\xi_\alpha$ son coefficient d'amortissement.

**5.** Procédé selon la revendication 2, **caractérisé en ce que** la donnée déjà présente et disponible dans le véhicule pour estimer la vitesse de roulis est l'accélération transversale.

**6.** Procédé selon la revendication 5, **caractérisé en ce que** la mesure de l'accélération transversale permet d'estimer la vitesse de roulis en utilisant la fonction de transfert suivante :

$$\frac{\dot{\vartheta}(s)}{\gamma_t(s)} = \frac{G_\gamma \cdot s}{s^2 + 2\xi_\gamma \omega_{n_\gamma} \cdot s + \omega_{n_\gamma}^2}$$

où $G_\gamma$ représente le gain statique de cette fonction de transfert, $\omega_{n_\gamma}$ sa pulsation propre et $\xi_\gamma$, son coefficient d'amortissement.

**7.** Procédé selon l'une quelconque des revendications précédentes, **caractérisé en ce que** l'un des paramètres est la vitesse de tangage.

**8.** Procédé selon la revendication 7, **caractérisé en ce que** la donnée déjà présente et disponible dans le véhicule pour estimer la vitesse de tangage est l'accélération longitudinale.

**9.** Procédé selon la revendication 8, **caractérisé en ce que** la fonction de transfert utilisée pour estimer la vitesse de tangage à partir de l'accélération longitudinale est donnée par:

$$\frac{\dot{\varphi}(s)}{\gamma_l(s)} = \frac{G_{\gamma_l} \cdot s}{s^2 + 2\xi_{\gamma_l} \omega_{n_{\gamma_l}} \cdot s + \omega_{n_{\gamma_l}}^2}$$

OÙ $G_{\gamma_l}$, $\omega_{n_{\gamma_l}}$ et $\xi_{\gamma_l}$ représentent respectivement le gain statique, la pulsation propre et le coefficient d'amortissement de cette fonction de transfert.

**10.** Procédé selon l'une quelconque des revendications précédentes, **caractérisé en ce que** la donnée présente et disponible dans le véhicule, permettant d'estimer le paramètre apte à détecter le phénomène de battement de roue, est la vitesse de rotation des roues du véhicule.

**11.** Procédé selon l'une quelconque des revendications 1 à 10, **caractérisé en ce qu'**il comprend une étape postérieure consistant à envoyer aux amortisseurs semi-actifs, des requêtes élaborées directement à partir de la valeur estimée des paramètres.

**12.** Procédé selon la revendication 1, **caractérisé en ce qu'**il comprend une étape postérieure consistant à envoyer aux amortisseurs semi-actifs, des requêtes élaborées au moyen de cartographies.

Famo [N]

1500

1000

500

max

min

-1          -0.5                    0.5          1          Vdeb [m/s]

-500

-1000

# Fig. 1

Réseau CAN

-1-

Amortisseur
avant gauche
-5-

Amortisseur
avant droit
-6-

Capteur
angle volant
-13-

Calculateur
ABS+ESP
-2-

Calculateur
moteur
-3-

Calculateur
amortisseurs
-4-

Capteur
accélération
trans et longi
-14-

Capteur
vitesse roue
AVG -9-

Capteur
vitesse roue
AVD -10-

Capteur
ptmc
-15-

Capteur
vitesse roue
ARG -11-

Capteur
vitesse roue
ARD -12-

Amortisseur
arrière gauche
-7-

Amortisseur
arrière droit
-8-

# Fig. 2

**Fig. 3**

**Fig. 4**

**ENTREES**

Bouton
conducteur

Vref

Vitesse
de roulis $\vartheta$

Vitesse
de tangage $\dot{\varphi}$

Flag_
Battement

Tarage
initial

-23-

Composante
roulis
-24-

Composante
tangage
-25-

Composante
battemant roues
-26-

Composante
tarage de base
-27-

+

Saturation
Demux
-28-

22

**SORTIES**

-29-
Requête de
courant AVG

-30-
Requête de
courant AVD

-31-
Requête de
courant ARG

-32-
Requête de
courant ARD

# Fig. 5

Fig. 6

Europäisches
Patentamt

European
Patent Office

Office européen
des brevets

**RAPPORT DE RECHERCHE EUROPEENNE**

Numéro de la demande

EP 12 30 5070

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | FR 2 932 416 A3 (RENAULT SAS [FR]) 18 décembre 2009 (2009-12-18) * page 3, ligne 16 - page 4, ligne 16 * ----- | 1-12 | INV. B60G17/08 |
| Y | FR 2 890 905 A1 (PEUGEOT CITROEN AUTOMOBILES SA [FR]) 23 mars 2007 (2007-03-23) * le document en entier * ----- | 1-12 | |

DOMAINES TECHNIQUES
RECHERCHES (IPC)

B60G

Le présent rapport a été établi pour toutes les revendications

| Lieu de la recherche | Date d'achèvement de la recherche | Examinateur |
|---|---|---|
| La Haye | 13 février 2012 | Savelon, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 30 5070

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-02-2012

| Document brevet cité au rapport de recherche | | Date de publication | Membre(s) de la famille de brevet(s) | Date de publication |
|---|---|---|---|---|
| FR 2932416 | A3 | 18-12-2009 | AUCUN | |
| FR 2890905 | A1 | 23-03-2007 | AT 532656 T | 15-11-2011 |
| | | | CN 101312843 A | 26-11-2008 |
| | | | EP 1926618 A1 | 04-06-2008 |
| | | | FR 2890905 A1 | 23-03-2007 |
| | | | JP 2009508754 A | 05-03-2009 |
| | | | US 2008300752 A1 | 04-12-2008 |
| | | | WO 2007034106 A1 | 29-03-2007 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2914993